# EUROPÄISCHE PATENTSCHRIFT

(11) **EP 2 961 855 B1**
(45) Veröffentlichungstag und Bekanntmachung des Hinweises auf die Patenterteilung: **15.01.2020**
(21) Anmeldenummer: 14727153.0
(22) Anmeldetag: 25.02.2014
(51) Int. Cl.: C22B 3/16, C22B 15/00, C23F 1/00

(54) **HYDROMETALLURGISCHES VERFAHREN ZUR RÜCKGEWINNUNG VON METALLEN UND/ODER HALBMETALLEN AUS VERBINDUNGS-HALBLEITERMATERIALIEN UND/ODER RÜCKKONTAKTMATERIALIEN UND/ODER TRANSPARENT ELEKTRISCH LEITFÄHIGE OXIDE (TCO´S) ENTHALTENDEN ABFALLMATERIALIEN**
HYDROMETALLURGICAL PROCESS FOR RECOVERY OF METALS AND/OR SEMIMETALS FROM WASTE MATERIALS CONTAINING COMPOUND SEMICONDUCTOR MATERIALS AND/OR BACK CONTACT MATERIALS AND/OR TRANSPARENT ELECTRICALLY CONDUCTING OXIDES (TCOS)
PROCÉDÉ HYDROMÉTALLURGIQUE DE RÉCUPÉRATION DE MÉTAUX ET/OU MÉTALLOÏDES À PARTIR DE DÉCHETS CONTENANT DES MATÉRIAUX SEMI-CONDUCTEURS DE CONNEXION ET/OU DES MATÉRIAUX DE CONTACTS ARRIÈRES ET/OU DES OXYDES ÉLECTROCONDUCTEURS TRANSPARENTS (TCO)

(30) Priorität: 26.02.2013 DE 102013003156
(43) Veröffentlichungstag der Anmeldung: 06.01.2016
(73) Patentinhaber: Loser, Ulrich, 04721 Rosswein / OT Grunau (DE); Palitzsch, Wolfram, 09599 Freiberg (DE)
(72) Erfinder: PALITZSCH, Wolfram, 09599 Freiberg (DE)
(74) Vertreter: Rumrich, Gabriele
(86) Internationale Anmeldenummer: PCT/DE2014/100066
(87) Internationale Veröffentlichungsnummer: WO 2014/131401

(56) Entgegenhaltungen:
- EP-A1- 1 050 604
- WO-A1-2008/102240
- WO-A1-2014/076544
- RU-A- 2012 120 959
- US-A- 4 650 553
- US-A- 4 957 653
- US-A- 5 017 267
- US-A- 5 505 872
- US-A- 5 755 950
- US-A1- 2012 045 898
- ZHENGHUI WU ET AL: "The kinetics of leaching galena concentrates with ferric methanesulfonate solution", HYDROMETALLURGY, Bd. 142, 11. Dezember 2013 (2013-12-11), Seiten 121-130, XP055135063, ISSN: 0304-386X, DOI: 10.1016/j.hydromet.2013.10.017

## Beschreibung

Die vorliegende Erfindung betrifft ein hydrometallurgisches Verfahren zur Rückgewinnung von Metallen und/oder Halbmetallen aus Verbindungs-Halbleitermaterialien und/oder Rückkontaktmaterialien und/oder transparent elektrisch leitfähige Oxide (TCO's) enthaltenden Abfallmaterialien und somit ein nasschemisches Verfahren zum Rückgewinnen von Metallen, die oft nur in geringer Konzentration unter anderem als typische III-V-, II-VI- oder I-III-VI₂-Verbindungshalbleitermaterialien in High-Tech- bzw. Green-Tech-Abfällen aber auch als Rückkontakte, wie Molybdän oder als Frontkontakte, wie TCO's (transparente, elektrisch leitfähige Oxide), vorkommen. Ohne Elemente, wie Indium, Gallium, Arsen, Cadmium, Tellur, Molybdän, Kupfer, Silber und Selen sind beispielsweise Photovoltaikanlagen, moderne Tablet-PC's und Smartphones nicht denkbar, wobei die aufgeführten Metalle oft als Intermediate, wie zum Beispiel als Galliumarsenid (GaAs) verarbeitet werden und dadurch völlig andere Eigenschaften aufweisen, als die Elemente zeigen, aus den sie bestehen. Für diese Vielzahl an, für unsere heutigen innovativen Produkte essentiellen Materialien, gibt es noch keine universelle Lösung, was die Rückgewinnung aus Produktionsabfällen und End-Of-Life-Produkten betrifft. Neben den auf Silicium basierenden Photovoltaik-Technologien gibt es aktuell eine Vielzahl anderer PV-Abfälle, basierend auf Dünnschichttechnologien mit Kupfer-Indium-Diselenid (CIS), Kupfer-Indium-Gallium-Diselenid (CIGS), Cadmiumtellurid (CdTe) und Galliumarsenid (GaAs). Die wirtschaftliche Bedeutung des Recyclings von PV-Modulen und die damit verbundene erneute Verwendung von diesen Metallen ist inzwischen ein wichtiges Thema.

Aber die dissipative Verwendung vieler spezieller Materialien in unzähligen Produkten (Dünnschicht-Photovoltaikmodule, Mobiltelefone, Flachbildschirme etc.) erschwert das Recycling und erlaubt die Rückführung in Recyclingkreisläufe nur bis zu einem gewissen Grad. Allzu oft führt die Fokussierung auf enthaltene wertvolle Metalle schnell zu der Erkenntnis, dass sich deren Aufarbeitung wirtschaftlich nicht darstellen lässt, zumal allgegenwärtig ein gewisser Energiebeitrag mit entsprechenden Kosten zu beachten ist. Werden allerdings Synergien einbezogen, universelle Verfahren angewendet und strebt man ein Verwertungsverfahren an, das möglichst jeden Bestandteil des jeweiligen Abfalls in Produkte überführen kann, dann hat man gute Chancen, ein wirtschaftlich erfolgreiches Recycling zu etablieren.

Zusätzlich sind bereits gesetzlichen Vorschriften, wie z.B. das neue deutsche "Kreislaufwirtschaftsgesetz" auf eine maximale Quote beim Verwerten angelegt - bei einem Minimum an Einsatz von Ressourcen (z.B. Energie und Rohstoff). Und weiterhin sind für High-Tech- und Green-Tech-Produkte auch europaweit neue Richtlinien in Arbeit, wie die speziell für die Photovoltaik-Industrie in naher Zukunft verbindliche Richtlinie des Europäischen Parlamentes und Rates über Elektro- und Elektronik-Altgeräte (WEEE-Richtlinie). Diese regelt umfassend das fachgerechte Verwerten von Elektro(nik)altgeräten, inklusive dessen Finanzierung durch die Produzenten - und zukünftig eben auch das Recycling von Photovoltaikmodulen.

Aus diesen Entwicklungen wird zusätzlich das Interesse an wirtschaftlichen Recyclingverfahren generiert.

Mit Blick auf die Ökotoxizität der beteiligten Materialen fällt auf, dass giftige Elemente, wie Arsen oder Cadmium sowohl bei PV-Modulen, als auch bei Kommunikationsgeräten eine bedeutende Rolle spielen.

Umso wichtiger ist es, umweltfreundliche Recyclingverfahren für Produktionsabfälle oder defekte bzw. ausgesonderte Produkte anzubieten, was das Ziel der vorliegenden Erfindung ist.

Die US 5 755 950 A beschreibt das Entfernen von Zinn bzw. Zinn/Blei-Plattierungen von einem Kupferuntergrund. Bei dem zu behandelnden Material handelt es sich somit um reines Metall (Zinn) bzw. um ein Lot (Zinn/Blei). Ein Lot ist eine Metall-Legierung, eine Lösung eines/mehrerer Metalle(s) in einem anderen. Bei der dabei verwendeten Kombination aus Methylsulfonsäure und Salpetersäure reagiert die Salpetersäure zu Ammoniummesylat, Hydroxylamin und Stickstoff. Dies kann zu Abwasserproblemen führen bzw. ist im Nachgang eine spezielle Behandlung erforderlich. Weiterhin wird ausgeführt, dass das Reinigen der Kupfermatrix eine elektrochemische Reaktion ist. Es wird Kupfermesylatlösung zugegeben, was bewirkt, dass sich unedlere Metalle, wie Zinn und Blei lösen und sich das gelöste Kupfer auf der Kupfermatrix abscheidet. Die Materialien gehen somit nicht direkt in Lösung. Ein weiterer Nachteil besteht darin, dass die Gefahr der Bildung nitroser Gase besteht, für die generell eine Abluftreinigung vorgeschrieben ist.

Diese Lösung gestaltet sich somit insgesamt aufwendig.

Aktuell wird in den USA und Malaysia Cadmiumtellurid-Abfall verarbeitet, wobei das Verfahren als sehr aufwendig beschrieben wird (US 5453111). Das Abschöpfen von Kunststoff nach einer warmen Salpetersäurebehandlung zerkleinerter Module stellt keine gute ökonomische und ökologische Lösung dar. Ebenfalls wird eine thermische Behandlung (Pyrolyse) sowie die Entfernung von einigen Metallen in der Gasphase (EP 1187224 B1) nicht zu einem kostengünstigen Verfahren führen. In der Druckschrift US 6391165 B1 wird ein Verfahren zur Zurückgewinnung von ausschließlich Cadmium und Tellur beschrieben, während sich die deutsche Patentschrift DE 102008058530 B4 nur so genannte Chalkopyrite behandelt. Alle diese Prozesse zielen jeweils nur auf einzelne Halbleitertypen ab und behandeln ausschließlich Photovoltaikmaterialien. Eine Verwertungsmöglichkeit für galliumarsenidhaltige Abfälle fehlt bisher völlig.

Aufgabe der Erfindung ist es, die Nachteile des Standes der Technik zu überwinden und ein vielseitig anwendbares hydrometallurgisches Verfahren zur Rückgewinnung von Metallen (auch Halbmetallen) aus Abfallmaterialien, die Verbindungs-Halbleitermaterialien und/oder Rückkontaktmaterialien und/oder transparent elektrisch leitfähigen Oxiden (TCO's) enthalten, insbesondere von III-V-, II-VI- oder I-III-VI₂-Verbindungshalbleitermaterialien aus unterschiedlichen High-Tech- bzw. Green-Tech-Abfällen, aber auch Rückkontakte, wie Molybdän oder Frontkontakte, wie TCO's zu entwickeln, wobei die oben beschriebenen halbleiterhaltigen Abfälle durch geeignete flüssige Reaktionspartner so behandelt werden, dass die wertvollen Halbleitermaterialien (Metalle) elegant aufgelöst werden und gleichzeitig für die weitere Verarbeitung konzentriert werden. Das Verfahren soll dabei effizient, energiesparend und die Umwelt schonend arbeiten.

Erfindungsgemäß wird die Aufgabe durch die Merkmale des ersten Patentanspruchs gelöst.

Vorteilhafte Ausgestaltungen ergeben sich aus den Unteransprüchen.

Das hydrometallurgische Verfahren dient zur Rückgewinnung von Metallen und/oder Halbmetallen (nachfolgend nur Metalle genannt) aus Abfallmaterialien, die
- III-V-, II-VI- oder I-III-VI₂-Verbindungshalbleitermaterialien und/oder
- Rückkontaktmaterialien und/oder
- transparent elektrisch leitfähigen Oxiden (TCO's) enthalten, insbesondere zur Rückgewinnung von Metallen/Halbmetallen aus Abfallmaterialien wie High-Tech- bzw. Green-Tech-Abfällen, wobei die Abfallmaterialien erfindungsgemäß mit einer Reaktionslösung aus entweder
   - Wasser, 1 bis 5 Masse-% Natriumbisulfat und 1 - 5 Masse-% Natriumchlorit,
      oder
   - Wasser, 1 bis 50 Masse-% Organosulfonsäure und im stöchiometrischen Verhältnis zur Organosulfonsäure 1 - 5 Masse-% eines Oxidationsmittels,
   durchmischt und die rückzugewinnenden Metalle und/oder Halbmetalle aufgelöst werden.

Die Abfallmaterialien können beispielsweise auch aus Industrieabfällen oder Produktionsabfällen gebildet werden und auch nur Metalle- bzw. Metallverbindungen beinhalten, die rückzugewinnen sind.

Weiterhin können die rückzugewinnenden Metalle der Abfallmaterialien auf einer Trägermatrix der Abfallmaterialien abgeschieden oder auch ein komplettes Bauteil sein, welches zusätzlich noch andere bauteiltypischen Materialien, wie beispielsweise Glas oder Kunststoff enthält. In diesem Fall erfolgt nach Abschluss des Löseprozesses der rückzugewinnenden Metalle von der Trägermatrix und Übergang in die Reaktionslösung die Trennung der mit den Elementen der in Lösung gegangen rückzugewinnenden Metalle angereicherten polymetallischen Reaktionslösung von der festen entfrachteten Trägermatrix und die von den rückzugewinnenden Materialien befreite Trägermatrix wird anschließend mit Wasser gewaschen.

Mit dem erfindungsgemäßen Verfahren können Metalle und Halbmetalle aus unterschiedlichsten Abfallmaterialien rückgewonnen werden, wobei nachfolgend unter dem Begriff Metalle auch die Halbmetalle zu verstehen sind. Die vorliegende Erfindung betrifft daher ein vielseitig anwendbares hydrometallurgisches Verfahren zur Behandlung von III-V-, II-VI- oder I-III-VI₂-halbleiterhaltigen Abfällen, welches sich auch für die Extraktion von Elektro- bzw. Elektronikschrotten, Rückkontakte, wie Molybdän oder Frontkontakte, wie ITO, aber auch auf alle nicht auf Silizium basierten Dünnschichtphotovoltaik-Abfälle gleichermaßen anwenden lässt, um aus den Abfallmaterialien Metalle (oder Halbmetalle), wie beispielsweise Cd, Cu, Mo, Se, In, Ga, As, Se, Te usw. zurückzugewinnen.

Mit dieser neuen universellen Methode werden die Nachteile von bisher angewendeten Verfahren, nämlich die Beschränkung auf Einzellösungen, die nicht übertragbar sind, die lange Zeit für die Leaching-Prozesse und die Gefahr der Bildung von hoch giftigen Gasen, wie nitrose Gase oder Metallwasserstoff-Verbindungen überwunden.

Die Abfälle werden bei Bedarf vor der hydrometallurgischen Behandlung so zerkleinert, dass die Halbleitermaterialien einer Flüssigkeit zugänglich werden. Dabei spielt es keine Rolle, wie groß die einzelnen Teile am Ende vor der hydrometallurgischen Behandlung sind. Die so vorbereiteten halbleiterhaltigen Abfälle werden anschließend der hydrometallurgischen Behandlung zugeführt.

In einer Verfahrensvariante wird das Anfallmaterial erfindungsgemäß im ersten Schritt mit Wasser so benetzt, dass es mit Wasser überschichtet ist. Die Wassertemperatur hat dabei normale Umgebungstemperatur oder weniger, wenn es aus einer kalten Leitung entnommen wurde. Temperaturerhöhungen führen erfahrungsgemäß zu einer Reaktionsbeschleunigung.

In dieses Bad wird nun im Verhältnis zum Wasser 1 bis 5 Masseprozent Natriumbisulfat zugegeben. Unmittelbar im Anschluss erfolgt durch einfaches Einstreuen die Zugabe von Natriumchlorit (bevorzugt in ungelöster Form), worauf die sofortige Lösung der Halbleiterschichten einsetzt. Eine Durchmischung der Reaktionslösung mit den zu behandelnden Abfällen begünstigt das Ablösen der Halbleiterschichten/Metalle und kann durch einfaches Umpumpen der Flüssigkeit innerhalb des Reaktionsansatzes erreicht werden. Nach kurzer Kontaktzeit sind die rückzugewinnenden Materialien/Metalle in Lösung gegangen und es erfolgt bei Bedarf eine Trennung der festen von der flüssigen Phase. Nach dem Entfernen der flüssigen Phase durch beispielsweise Abzug oder durch Filtrieren, wird die verbleibende Trägermatrix der Abfallmaterialien (meist Kunststoff und/oder Glas) mit vorzugsweise klarem Wasser gewaschen. Das Waschwasser kann für neuerliche Ansätze dann als Vorlagewasser zwischengespeichert und weiter verwendet werden.

Die abgelassene polymetallische Lösung kann bis zum Nachlassen des Lösevermögens bzw. dem Erreichen der Sättigung mehrmals verwendet werden und steht nach Beendigung des Prozesses einer weiteren Verarbeitung durch entsprechende Spezialfirmen als Konzentrat zur Verfügung.

Es wurde eine weitere alternative Möglichkeit gefunden, die ähnlich wirkt, nicht wesentlich anders zu bedienen ist und gleichwohl, schnell und effektiv Halbleitermaterialien/Metalle zu lösen vermag und somit als Extraktionsmittel für die oben beschriebenen Abfälle genutzt werden kann.

In einer weiteren erfindungsgemäßen Verfahrensvariante 2 werden in das oben beschriebene Benetzungsbad im Verhältnis zum Wasser vorzugsweise 15-20 Masseprozent reine Methylsulfonsäure (MSS) als Feststoff zugegeben. Der Feststoff löst sich unter Wärmeentwicklung sofort auf. Danach werden im stöchiometrischen Verhältnis zur bereits vorhandenen Methylsulfonsäure 1-5 Masse-% eines Oxidationsmittels (in gelöster oder ungelöster Form) zugegeben, um die Bildung von giftigen Metallwasserstoffverbindungen zu unterbinden und das Lösen der Halbleitermaterialien zu beschleunigen. Als Oxidationsmittel werden Perborate, Percarbonate, Hypochlorite und/oder Peroxide eingesetzt. Optional besteht die Möglichkeit, die eingesetzten Chemikalien nicht in fester Form für den Prozess zu nutzen, sondern als wässrige Lösung zu verwenden. Hier kann zwar ein noch schnelleres Löseverhalten der Metalle/Halbleiterschichten beobachtet werden, allerdings benötigt dieses Verfahren genügend Platz, um die Chemikalien entsprechend zu lösen und für den Einsatz vorzuhalten. Ein weiterer Vorteil des Einsatzes der Salze in fester Form ist die lange Kreislaufführung der Mutter-Lösung, da als Reaktionspartner nur die festen Substanzen zu einem gleichbleibenden Volumen an Flüssigkeit ergänzt werden müssen.

Der stark oxidative Charakter dieser Reaktion vermeidet das Entstehen von unerwünschten und gefährlichen Metallwasserstoffverbindungen. Optional kann die Reaktionszeit durch Erhöhung der Temperatur der Reaktionslösung entsprechend verkürzt werden. Wichtig ist, dass die Trägermaterialmatrix immer vollständig von der Reaktionslösung benetzt bzw. überschichtet ist.

Die verbliebene Trägermaterial-Matrix der Abfallmaterialien wird mit vorzugsweise klarem Wasser gewaschen und anschließend getrocknet und kann somit ebenso einer weiteren Verwendung zur Verfügung gestellt werden.

Die entstehende polymetallische Lösung kann vorteilhafter weise bis zur vollständigen Sättigung der Lösung durch die abgelösten Halbleitermaterialien/Metalle in den Reaktionsansatz zurückgeführt wird. Dazu ist es von Vorteil, wenn vor der Rückführung der polymetallischen Lösung in den Reaktionsprozess eine Analyse der Sättigung und eine daraufhin abgestellte prozentuale Zugabe der Reagenzien erfolgt.

Die vorliegende Erfindung zeigt ein Recyclingverfahren für typische III-V, II-VI- oder I-III-VI₂-Verbindungshalbleitermaterialien und/oder Rückontaktmaterialien (wie Molybdän) oder Frontkontake und/oder TCO's auf, wie sie in High-Tech- und Green-Tech- Abfällen, aber auch in allen nicht auf Silizium basierten Dünnschichtphotovoltaik-Abfällen, vorkommen. Das Verfahren läuft bei Umgebungstemperatur ab, verbraucht wenig Energie und ist vor allem auf sehr viele verschiedene Abfallstoffströme anwendbar.

Das erfindungsgemäße Verfahren ermöglicht es, diese wertvollen Halbleitermaterialien/Metalle und/oder TCO's aus den oben beschriebenen halbleiterhaltigen/metallhaltigen Abfallmaterialien durch geeignete flüssige Reaktionspartner elegant zu lösen/rückzugewinnen und diese gleichzeitig für die weitere Verarbeitung zu konzentrieren, zu separieren und vorzuhalten. Das von den Metallen befreite Trägermaterial wird entweder entsorgt oder anderweitig verwertet.

Mit der vorliegenden Erfindung wird erstmalig ein effizientes und universelles nasschemisches Verfahren zum Rückgewinnen von Metallen, die oft nur in geringer Konzentration unter anderem als typische III-V-, II-VI- oder I-III-VI₂-Verbindungs-Halbleitermaterialien in High-Tech- bzw. Green-Tech-Abfällen, als Rückkontakte, wie Molybdän oder Frontkontakte, wie TCO's, aber auch in allen nicht auf Silizium basierten Dünnschichtphotovoltaik-Abfällen vorkommen, zur Verfügung gestellt.

Dazu werden die mechanisch vorbehandelten Abfälle in einer vorteilhaften Verfahrensvariante mit Wasser überschichtet und anschließend mit Natriumbisulfat und Natriumchlorit oder Organosulfonsäure und einem Oxidationsmittel kontaktiert, wodurch die typischen III-V-, II-VI- oder I-III-VI₂-Verbindungshalbleitermaterialien und/oder Rückkontaktmaterialien wie beispielsweise Molybdän und/oder (TCO's) in Lösung gehen. Anschließend erfolgt die Trennung der festen von der flüssigen Phase und die Weiterbehandlung.

Dabei werden auch Halbmetalle wie Arsen, Selen, Tellur usw. durch das erfindungsgemäße Verfahren aus den Abfallmaterialien gelöst.

Die Erfindung soll anhand von Ausführungsbeispielen näher erläutert werden.

### Ausführungsbeispiel 1

Ein, mit typischem Indium- und Gallium-Halbleiter beschichtetes flaches 5 cm x 12,5 cm großes Stück Abfallmaterial(ca. 5 g Halbleiterbeschichtung/m²) wurde mit 1,3 g Wasser beschichtet. Dazu wurden zunächst 15 mg reine Methylsulfonsäure als in Kristallform und danach ein Tropfen 30%ige Wasserstoffperoxidlösung gegeben. Nach 10 min. Einwirkzeit war die Halbleiterbeschichtung vollständig aufgelöst. Aus der Analyse der polymetallischen Lösung wurden die einzelnen Mengen der aufgelösten Elemente der 62,57 cm² großen Fläche ermittelt: Cd: 0,4 mg, Cu: 3,5 mg, Mo: 8,19 mg, Se: 12,35 mg, In: 5,2 mg, Ga:1,3 mg.

### Ausführungsbeispiel 2

Ein mit typischem Indium- und Gallium-Halbleiter beschichtetes flaches 10 cm x 12,5 cm großes Abfallstück (ca. 5 g Halbleiterbeschichtung/m²) wurde mit 15 g Wasser überschichtet. Dazu wurden zunächst 150 mg Natriumbisulfat eingestreut und danach 120 mg Natriumchlorit. Nach 10 min Einwirkzeit war die Halbleiterbeschichtung vollständig aufgelöst. Die Analyse der Lösung ergab folgende Gehalte: Cd: 37mg/l, Cu: 350 mg/l, Mo: 1100 mg/l, Se: 1200 mg/l, In: 570 mg/l, Ga: 140 mg/l

### Ausführungsbeispiel 3

Ein 11,77 g schwerer Abfallsplitter aus GaAs (**Galliumarsenid)** wurde mit 80 ml Wasser überschichtet. Nach Zugabe von 20 g fester reiner Methylsulfonsäure und drei Tropfen 35%igem Wasserstoffperoxid konnte das zügige Auflösen des GaAs beobachtet werden. Nach 10 min. war das Stück in Lösung gegangen. Die Analyse der Lösung zeigt die Metallgehalte: As: 61,9 g/l und Ga: 56,8 g/l.

## Patentansprüche

1. Hydrometallurgisches Verfahren zur Rückgewinnung von Metallen und/oder Halbmetallen (nachfolgend nur Metalle genannt) aus
- III-V-, II-VI- oder I-III-VI₂-Verbindungshalbleitermaterialien und/oder
- Rückkontaktmaterialien und/oder
- transparent elektrisch leitfähigen Oxiden (TCO's)
enthaltenden Abfallmaterialien wie High-Tech- bzw. Green-Tech-Abfällen, **dadurch gekennzeichnet, dass**
- die Abfallmaterialien mit einer Reaktionslösung aus entweder
• Wasser, 1 bis 5 Masse-% Natriumbisulfat und 1 - 5 Masse-% Natriumchlorit,
oder
• Wasser, 1 bis 50 Masse-% Organosulfonsäure und im stöchiometrischen Verhältnis zur Organosulfonsäure 1 - 5 Masse-% eines Oxidationsmittels,
durchmischt und die rückzugewinnenden Metalle und/oder Halbmetalle aufgelöst werden.

2. Hydrometallurgisches Verfahren nach Anspruch 1, **dadurch gekennzeichnet, dass** bei einer in den Abfallmaterialien vorhandenen Trägermatrix nach Abschluss des Löseprozesses der rückzugewinnenden Metalle von Trägermatrix und Übergang in die Reaktionslösung die Trennung der polymetallischen Lösung mit den nun enthaltenen rückzugewinnenden Metallen von der übrigen festen entfrachteten Trägermatrix der Abfallmaterialien erfolgt und die von den rückzugewinnenden Metallen befreite Trägermatrix anschließend mit Wasser gewaschen wird.

3. Hydrometallurgisches Verfahren nach Anspruch 1 oder 2, **dadurch gekennzeichnet, dass** die gewaschene Trägermatrix und das Waschwasser getrennt abgeführt werden und dass das Waschwasser für einen neuerlichen Ansatz des Verfahrens zwischengelagert wird.

4. Hydrometallurgisches Verfahren nach Anspruch 1, **dadurch gekennzeichnet, dass** der Reaktionslösung reine Organosulfonsäure in Form von Methylsulfonsäure zugegeben wird.

5. Hydrometallurgisches Verfahren nach Anspruch 1, **dadurch gekennzeichnet, dass** als Oxydationsmittel Perborate, Percarbonate, Hypochlorite oder Peroxide eingesetzt werden.

6. Hydrometallurgisches Verfahren nach einem der Ansprüche 1 bis 5, **dadurch gekennzeichnet, dass** die polymetallische Reaktionslösung jeweils bis zur vollständigen Sättigung in den Reaktionsansatz zurückgeführt wird.

7. Hydrometallurgisches Verfahren nach Anspruch 6, **dadurch gekennzeichnet, dass** vor der Rückführung der polymetallischen Lösung in den Reaktionsprozess eine Analyse der Sättigung und eine daraufhin abgestellte prozentuale Zugabe der Reagenzien erfolgt.

## Claims

1. Hydrometallurgical process for the recovery of metals and/or semi-metals (hereinafter referred to as metals only) from
- III-V, II-VI or I-III-VI₂ compound semiconductor materials and/or
- back contact materials and/or
- transparent electrically conductive oxides (TCOs)
containing waste materials such as high-tech or green-tech waste, **characterized in that**
- the waste materials are mixed thoroughly with a reaction solution of either
• water, 1 to 5% by mass of sodium bisulphate and 1 to 5% by mass of sodium chlorite,
or
• water, 1 to 50% by mass of organosulphonic acid and 1 to 5% by mass of an oxidizing agent in the stoichiometric ratio to organosulphonic acid,
and the metals and/or semi-metals to be recovered are dissolved.

2. Hydrometallurgical process according to claim 1, **characterized in that**, in the case of a carrier matrix present in the waste materials, after completion of the dissolution process of the metals to be recovered from the carrier matrix and transition into the reaction solution, the separation of the polymetallic solution with the now contained metals to be recovered is carried out from the remaining solid removed carrier matrix of the waste materials and the carrier matrix freed of the metals to be recovered is subsequently washed with water.

3. Hydrometallurgical process according to claim 1 or 2, **characterized in that** the washed carrier matrix and the washing water are discharged separately, and **in that** the washing water is temporarily stored for a new batch of the process.

4. Hydrometallurgical process according to claim 1, **characterized in that** pure organosulphonic acid in the form of methyl sulphonic acid is added to the reaction solution.

5. Hydrometallurgical process according to claim 1, **characterized in that** perborates, percarbonates, hypochlorites or peroxides are used as oxidizing agents.

6. Hydrometallurgical process according to one of claims 1 to 5, **characterized in that** the polymetallic reaction solution is recycled into the reaction mixture in each case until complete saturation.

7. Hydrometallurgical process according to claim 6, **characterized in that**, before the polymetallic solution is recycled into the reaction process, the saturation is analyzed and the reagents are added in response thereto as a percentage of the solution.

## Revendications

1. Procédé hydrométallurgique pour la récupération de métaux et/ou de métalloïdes (regroupés ci-après sous l'appellation de métaux) à partir de déchets contenant
- des matériaux semi-conducteurs composites III-V, II-VI ou I-III-VI₂ et/ou
- des matériaux de contact arrière et/ou
- des oxydes conducteurs électriques transparents (TCO)
tels que des déchets de matériaux de haute technologie ou de technologie verte, **caractérisé en ce que**
- les déchets de matériaux sont mélangés avec une solution de réaction composée soit
• d'eau, de 1 à 5 % de la masse de bisulfate de sodium et de 1 à 5 % de la masse de chlorite de sodium,
soit
• d'eau, de 1 à 50 % de la masse d'acide sulfonique organique et, dans un rapport stœchiométrique avec l'acide sulfonique organique, de 1 à 5 % de la masse d'un oxydant,
et les métaux et/ou métalloïdes à récupérer sont dissous.

2. Procédé hydrométallurgique selon la revendication 1, **caractérisé en ce que**, les déchets de matériaux contenant une matrice de support, après la fin de la dissolution des métaux à récupérer sur la matrice de support et leur passage dans la solution de réaction, la solution polymétallique avec les métaux à récupérer qu'elle contient à présent est séparée du reste de la matrice de support solide nettoyée des déchets de matériaux et la matrice de support débarrassée des métaux à récupérer est ensuite lavée avec de l'eau.

3. Procédé hydrométallurgique selon la revendication 1 ou 2, **caractérisé en ce que** la matrice de support lavée et l'eau de lavage sont évacuée séparément et **en ce que** l'eau de lavage est entreposée pour une nouvelle charge du procédé.

4. Procédé hydrométallurgique selon la revendication 1, **caractérisé en ce que** la solution de réaction est additionnée d'acide sulfonique organique pur sous la forme d'acide méthylsulfonique.

5. Procédé hydrométallurgique selon la revendication 1, **caractérisé en ce que** les oxydants utilisés sont des perborates, des percarbonates, des hypochlorites ou des peroxydes.

6. Procédé hydrométallurgique selon l'une des revendications 1 à 5, **caractérisé en ce que** la solution de réaction polymétallique est ramenée chaque fois dans la charge de réaction jusqu'à ce qu'elle soit complètement saturée.

7. Procédé hydrométallurgique selon la revendication 6, **caractérisé en ce qu'**avant le renvoi de la solution polymétallique au processus de réaction, la saturation est analysée et un pourcentage des réactifs ajusté à la saturation est ajouté.
